# DEMANDE DE BREVET EUROPEEN

(11) **EP 1 164 396 A1**
(43) Date de publication de la demande: **19.12.2001**
(21) Numéro de dépôt: 01401325.4
(22) Date de dépôt: 21.05.2001
(51) Int. Cl.: G02B 6/44

(54) **Cable à fibres optiques**

(30) Priorité: 29.05.2000 FR 0006837
(71) Demandeur: ALCATEL, 75008 Paris (FR)
(72) Inventeur: Couvrie, Gérard, 62100 Calais (FR); Avrons, Alain, 62100 Calais (FR); Pouilly, Serge, 40468 Dusseldorf (DE); Bourget, Vincent, 62200 Boulogne sur Mer (FR)
(74) Mandataire: Laroche, Danièle

(57) **Abrégé**

L'invention porte sur un câble à fibres optiques comprenant un jonc (1) comprenant au moins une rainure (2) en hélice à sa périphérie, au moins deux tubes souples (4) assemblés entre eux et disposés dans la rainure (2), chaque tube souple (4) contenant une pluralité de fibres optiques (6) et un matériau souple (7) disposé entre les tubes souples (4) et le fond de la rainure (2). Des moyens de protection contre les agents extérieurs tels qu'une bande en aluminium ou un tube en matière plastique, enveloppent le jonc (1). Des moyens de rigidification (9) tels que des fils d'armure, entourent l'ensemble.

## Description

La présente invention concerne un câble à fibres optiques, plus particulièrement, un câble à fibres optiques à structure compacte comprenant un jonc rainuré dans les rainures duquel sont disposés des paquets de fibres optiques.

Les câbles aériens à fibres optiques sont posés en particulier au-dessus des lignes à haute tension, dans ou autour des câbles de garde (câbles jouant le rôle de paratonnerre).

DE-A-3742925 décrit un câble à fibres optiques comprenant un fil en acier central entouré par une couche intermédiaire d'éléments filaires qui est elle-même entourée par une couche extérieure de fils en acier. Les éléments filaires de la couche intermédiaire consistent pour les uns en des fils en acier et pour les autres en des éléments optiques consistant chacun en un tube en matière plastique contenant des fibres optiques. En d'autres termes, des fils en acier de la couche intermédiaire sont remplacés par des éléments optiques.

La capacité optique du câble, c'est-à-dire le nombre de fibres optiques qu'il comprend, est limitée du fait que la substitution de fils en acier par des éléments optiques diminue la résistance mécanique à la traction du câble. La diminution de résistance à la traction peut être compensée par l'adjonction d'une ou plusieurs couches supplémentaires de fils en acier, mais avec l'inconvénient d'augmenter le diamètre du câble et son coût.

US-A-4944570 décrit un câble à fibres optiques comprenant un jonc à rainures en hélices. Dans chaque rainure est disposé de façon ajustée un tube diélectrique souple contenant une ou plusieurs fibres optiques. Le tube contient aussi un composé diélectrique hydrofuge souple concourrant à maintenir en position les fibres optiques tout en permettant leur mouvement. Le jonc est recouvert par une bande en aluminium et entouré par des fils conducteurs conférant en majeure partie sa résistance mécanique au câble. En variante, la bande en aluminium est remplacée par un tube protecteur en matière plastique et un autre tube protecteur en matière plastique est disposé autour des fils conducteurs pour l'utilisation sous-marine du câble. Cette structure de câble définit une fenêtre de traction en raison de la possibilité de mouvement des fibres optiques à l'intérieur du tube en hélice qui les contient.

Pour obtenir une capacité optique importante, il y a lieu d'augmenter le nombre de tubes, et donc de rainures du jonc et/ou bien le nombre de fibres optiques contenues dans les tubes, ce qui a pour inconvénient une augmentation du diamètre du jonc et corrélativement du diamètre et/ou du nombre de fils conducteurs.

La présente invention a pour but d'éliminer les inconvénients de l'art antérieur, en particulier, elle vise à fournir un câble à fibres optiques à grande capacité optique pour un encombrement de câble limité.

A cette fin, la présente invention propose un câble à fibres optiques comprenant :
- un jonc en aluminium ou en alliage d'aluminium, comprenant au moins une rainure en hélice à sa périphérie ;
- au moins deux tubes souples assemblés entre eux et disposés dans la rainure, chaque tube souple contenant au moins une fibre optique ;
- un matériau souple disposé entre les tubes souples et le fond de la rainure ;
   des moyens de protection contre la pénétration d'agents extérieurs entourant le jonc
- des moyens de rigidification entourant lesdits moyens de protection,
- le jonc, les moyens de protection et les moyens de rigidification étant compatibles électrochimiquement.

Le jonc peut comprendre une pluralité de rainures en hélice à sa périphérie avec au moins deux tubes souples assemblés entre eux disposés dans chacune des rainures.

Selon un mode de réalisation préféré, un composé hydrophobe souple peut avantageusement remplir la rainure.

Par ailleurs, les moyens de rigidification peuvent comprendre une pluralité de fils toronnés, qui sont avantageusement en acier revêtu d'aluminium.

Dans ce mode de réalisation préféré, il est avantageux que les moyens de protection comprennent au moins une bande disposée hélicoïdalement autour du jonc et se chevauchant d'un tour à l'autre, la ou les bandes pouvant avantageusement être en aluminium ou en alliage d'aluminium. Ce câble est alors particulièrement adapté pour une utilisation comme câble de garde sur un pylône électrique. En variante, les moyens de protection peuvent comprendre un tube de protection, disposé autour du jonc, de préférence en matière plastique ou métallique. Dans ce cas, le câble peut présenter en outre une gaine disposée autour des moyens de rigidification, la gaine étant de préférence en matière plastique. De plus, un composé hydrophobe souple peut être avantageusement disposé dans les interstices entre le tube de protection et la gaine. Le câble de cette variante est particulièrement adapté à une utilisation dans des conditions sous-marines ou sous-fluviales.

Selon un autre mode de réalisation préféré, les moyens de rigidification comprennent un matériau à base de fibres et un tube de protection entoure les moyens de rigidification. Le câble de ce mode de réalisation est particulièrement adapté pour une utilisation dans des forages terrestres.

D'autres caractéristiques et avantages de l'invention apparaîtront à la lecture de la description qui suit d'un mode de réalisation préféré de l'invention, donnée à titre d'exemple et en référence au dessin annexé.

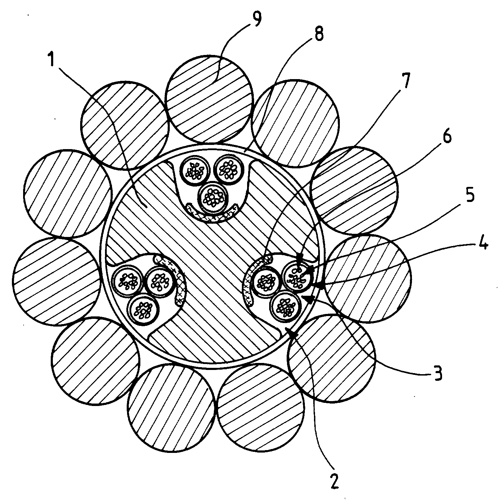

La figure 1 représente schématiquement une section droite d'un câble à fibres optiques selon un mode de réalisation de l'invention.

Le câble à fibre optique de la figure 1 comprend un jonc 1 présentant une section droite de préférence circulaire à la périphérie duquel sont réalisées une ou plusieurs rainures 2 (au nombre de trois dans l'exemple de la figure 1). Les rainures 2 évoluent en hélice le long du jonc 1, soit avec un pas à gauche, soit avec un pas à droite, soit avec un pas s'inversant régulièrement. Les rainures 2 sont de préférence disposées à intervalle angulaire régulier autour de la périphérie du jonc 1 vu en section droite et le nombre de rainures 2 est avantageusement deux, trois ou quatre. Le jonc 1 est réalisé de préférence en aluminium ou en alliage d'aluminium. Le jonc 1 permet, outre de transporter le courant électrique, de supporter les efforts mécaniques radiaux exercés sur lui et en particulier de fournir une résistance mécanique à l'aplatissement suffisante pour protéger les éléments optiques placés dans ses rainures. Les rainures 2 présentent une section transversale et un pas appropriés par rapport au diamètre du jonc 1 de façon à ce que le jonc 1 agisse sensiblement comme une tige solide.

Un module optique 3 est disposé dans chacune des rainures 2. Un module optique 3 comprend une pluralité de tubes souples 4 (au nombre de trois dans l'exemple de la figure 1) assemblés de préférence en hélice, soit à pas à gauche, soit à pas à droite, soit inversée régulièrement - dit en SZ -.

Chacun des tubes souples 4 contient une ou plusieurs fibres optiques 5 (leur nombre est de douze dans l'exemple de la figure 1), disposées libres à l'intérieur du tube souple. Les fibres peuvent être brassées ou non. On peut prévoir un gel souple diélectrique ou encore une poudre gonflante. Le gel 6 est choisi pour permettre un mouvement relatif sans friction entre les fibres optiques 5 et pour constituer une barrière protégeant les fibres optiques 5 contre l'eau, l'humidité, les agents chimiques et les poussières abrasives pouvant pénétrer dans le tube souple 4 en cas de déchirement. Le gel 6 présente aussi une résistance aux températures suffisantes pour supporter les températures auxquelles il pourra être soumis dans le câble. Le gel 6 pourra typiquement être un gel thixotropique et hydrophobe présentant une stabilité thermique et chimique dans le temps, tel qu'une gelée de pétrole ou un gel silicone.

Chacun des tubes souples 4 est réalisé en une matière diélectrique souple, extrudable en épaisseur mince et présentant une résistance à la manipulation suffisante (résistance au déchirement, à la traction...) pour permettre son assemblage avec les autres tubes 4 et leur mise en place dans les rainures 2 du jonc 1. Cette matière présente également une température de fusion suffisamment élevée pour que les tubes souples 4 ne soient pas affectés par les températures que pourrait atteindre le câble en raison des échauffements thermiques liés aux charges électriques transportées. A titre d'exemple, les tubes souples 4 peuvent être réalisés en PVC, polyester éther, polypropylène ou en EVA (copolymère éthylène/ acétate de vinyle). Les matériaux peuvent être chargés, par exemple par de la craie, de la silice, du talc ou d'autres charges minérales classiques. L'épaisseur de paroi des tubes souples 4 sera avantageusement comprise entre 0,05 mm et 0,4 mm.

Chacun des modules optiques 3 est disposé dans sa rainure 2 correspondante sans dépasser de la périphérie du jonc 1. En outre, un matériau souple 7 est placé entre le fond de chaque rainure 2 et le module optique 3 qui y est disposé. Ce matériau souple 7, de préférence diélectrique, écarte le module optique 3 du fond de sa rainure 2 lors de la fabrication du câble. Ce jeu entre le fond des rainures 2 et les modules optiques 3, combiné avec la souplesse du matériau 7, permet un déplacement radial de chacun des modules optiques 3 vers le fond de la rainure 2 correspondante apte à compenser l'élongation du câble lors de la pose sur site, par exemple sur des pylônes. Le matériau 7 pourra être un gel, une colle souple ou une mousse. La forme des rainures 2 est évidemment adaptée pour permettre le déplacement radial du module optique 3 qu'elles contiennent chacune et pour cela, elles ont de préférence des flancs parallèles et séparés par une distance au moins égale à la largeur d'un module optique 3. Par conséquent, ni les tubes souples 4, ni les fibres optiques 5 ne sont soumis à une augmentation sensible des contraintes de traction lors de l'élongation du câble dans la limite de la fenêtre de traction ainsi définie. Par fenêtre de traction, il faut entendre l'allongement relatif du câble nécessaire pour engendrer une augmentation sensible des contraintes dans les fibres optiques 5. La valeur de la fenêtre de traction dépendra notamment du déplacement radial maximal possible pour les modules optiques 3 dans leurs rainures 2 respectives et du pas de l'hélice formée par chacune des rainures 2.

Le jonc 1 peut être recouvert par une ou plusieurs bandes 8 en aluminium ou en alliage d'aluminium, appliquée hélicoïdalement autour du jonc 1 et se chevauchant d'un tour à l'autre. La ou les bandes 8 constituent une protection mécanique pour le jonc 1 et les modules optiques 3 qu'elles protègent également des agressions extérieures telles que la pénétration d'eau, d'humidité, d'agents chimiques, de poussières... La bande 8 assure aussi le contact électrique entre des fils d'armure 9 disposés autour de la bande 8 et le jonc 1. Le choix de l'aluminium comme matériau de la bande 8 assure sa compatibilité électrochimique avec le jonc 1, et évite donc la corrosion électrolytique entre eux. L'hydrogène pouvant être généré dans les tubes souples 4 pourra s'évacuer à travers le gel 6, puis à travers les parois des tubes souples 4 pour enfin s'échapper à travers les zones de chevauchement de la bande 8, ce qui minimise la concentration d'hydrogène autour des fibres optiques 5, et donc limite l'atténuation optique dans les fibres, étant précisé que le matériau des tubes souples 4 et le gel 6 ne présentent que des traces d'hydrogène dans les conditions de fonctionnement du câble.

Les fils d'armure 9 (au nombre de onze dans l'exemple de la figure 1) sont toronnés autour de la bande 8 et supportent la majeure partie des efforts mécaniques de traction s'exerçant sur le câble. Les fils d'armure 9 servent également de conducteurs électriques pour véhiculer les courants pouvant par exemple résulter de la foudre lorsque le câble est installé sur des pylônes. Les fils d'armures 9 sont avantageusement réalisés en acier recouvert d'aluminium, dit ACS (acronyme anglais d' « aluminium coated steel »). Le revêtement d'aluminium des fils 9 assure une excellente conductivité électrique et est compatible électrochimiquement avec la bande 8 évitant ainsi une corrosion électrolytique. Le coeur en acier des fils 9 leur confère la résistance mécanique. Le diamètre et le nombre de fils d'armure 9 est déterminé en fonction des contraintes mécaniques à supporter et du courant électrique maximal à transporter, compte tenu également de l'épaisseur de leur revêtement d'aluminium.

En variante, les rainures 2 contenant chacune leur module optique 3 et le matériau souple 7 peuvent être remplies en outre avec un gel similaire ou identique au gel 6. Ce gel 6 facilitera le mouvement relatif sans friction entre les tubes souples 4 ainsi qu'avec les parois des rainures 2 et constituera une barrière supplémentaire protégeant les tubes souples 4 contre l'eau, l'humidité, les agents chimiques et les poussières abrasives pouvant pénétrer dans les rainures 2 en cas de déchirement de la bande 8. Par ailleurs, on peut utiliser à la place des bandes en aluminium un tube métallique soudé ou toute autre solution assurant une protection du jonc.

Le câble à fibres optiques peut être fabriqué comme suit. Le tube souple 4 est extrudé autour des fibres optiques 5, brassées ou non ; on introduit lors de l'extrusion le gel 6 ou la poudre le cas échéant.

Les tubes souples 4 sont assemblés en hélice ou en SZ pour former les modules optiques 3. Dans chaque rainure 2 du jonc 1 sont disposés le matériau souple 7 au fond de la rainure, puis le module optique respectif. Les rainures 2 sont le cas échéant remplies de gel. Ensuite, la bande d'aluminium 8 est disposé autour du jonc 1, puis enfin les fils d'armure 9 sont toronnés autour du jonc 1.

A titre d'exemple, le câble pourra avoir les dimensions suivantes. Le jonc 1 a un diamètre extérieur de 7 mm et présente trois rainures 2 en hélice de largeur 2,7 mm et dont le fond repose sur un cercle imaginaire de diamètre 2,5 mm qui est coaxial au jonc 1. Dans chaque rainure 2 est disposé un module optique 3 comprenant trois tubes souples 4 dont chacun a 1,3 mm de diamètre et contient douze fibres optiques. Chaque tube souple 4 est réalisé en polypropylène et a une épaisseur de paroi de 0,15 mm. Le jonc 1 est enveloppé hélicoïdalement par deux bandes 8 en aluminium d'une épaisseur de 0,15 mm. Enfin, l'ensemble est entouré de onze fils d'armure de 2 mm de diamètre. Le câble ainsi obtenu a environ 12 mm de diamètre.

Le mode de réalisation décrit en relation avec la figure 1 est particulièrement adapté comme câble aérien, plus particulièrement, comme câble de garde sur les pylônes électriques. En variante, il est possible d'omettre la bande 8 en aluminium lorsque les conditions environnementales le permettent.

Dans un autre mode de réalisation, le câble à fibres optiques décrit en relation avec la figure 1 peut être adapté pour être utilisé comme câble sous-marin ou sous-fluvial. Pour cela, il suffit de remplacer les bandes en aluminium 8 par un tube protecteur appliqué autour du jonc 1 et réalisé en une matière thermoplastique extrudable tel que du polyéthylène ou du PVC (polychlorure de vinyle) ou encore par un tube en métal. En outre, une gaine protectrice extérieure est ajoutée autour des fils d'armure 9. Cette gaine peut aussi être réalisée en une matière thermoplastique extrudable telle que du polyéthylène ou du PVC, ou encore en un autre matériau approprié tel que de la toile de jute imprégnée. Bien entendu, le tube et la gaine confèrent entre autres une étanchéité à l'eau. Enfin, les interstices entre les fils d'armure 9 dans l'espace compris entre le tube protecteur et la gaine peuvent être remplis avec un gel hydrophobe souple, par exemple, du type utilisé à l'intérieur des tubes 3.

Dans encore un autre mode de réalisation, le câble à fibres optiques décrit en relation avec la figure 1 est adapté de la manière suivante. La bande 8 en aluminium et les fils d'armure 9 sont supprimés. Un ou plusieurs éléments de rigidification à base de fibres, appliqués longitudinalement, tressés ou enroulés hélicoïdalement autour du jonc 1. Ces éléments de rigidification peuvent être réalisés par exemple avec des fibres polyaramide. Un tube protecteur extérieur est disposé autour des éléments de rigidification précités. Ce tube protecteur est réalisé de préférence en une matière thermoplastique extrudable telle que le polyéthylène ou le PVC ou encore de la toile de jute imprégnée adéquatement. Ce type de câble pourra notamment être utilisé dans des applications de forage telle que l'exploration pétrolière où il y a lieu de raccorder des capteurs.

Bien entendu, la présente invention n'est pas limitée aux exemples et aux modes de réalisation décrits et représentés, mais elle est susceptible de nombreuses variantes accessibles à l'homme de l'art. En particulier, d'autres matériaux conducteurs que l'aluminium peuvent être utilisés pour le jonc 1, la bande 8 et le revêtement des fils d'armure 9.

## Revendications

1. Un câble à fibres optiques comprenant :
- un jonc (1) en aluminium ou en alliage d'aluminium, comprenant au moins une rainure (2) en hélice à sa périphérie ;
- au moins deux tubes souples (4) assemblés entre eux et disposés dans la rainure (2), chaque tube souple (4) contenant au moins une fibre optique (6);
- un matériau souple (7) disposé entre les tubes souples (4) et le fond de la rainure (2);
- des moyens de protection (8) contre la pénétration d'agents extérieurs entourant le jonc (1)
- des moyens de rigidification (9) entourant lesdits moyens de protection (8), le jonc (1), les moyens de protection (8) et les moyens de rigidification (9) étant compatibles électrochimiquement.

2. Le câble selon la revendication 1, **caractérisé en ce que** le jonc (1) comprend une pluralité de rainures (2) en hélice à sa périphérie avec au moins deux tubes souples (4) assemblés entre eux disposés dans chacune des rainures (2).

3. Le câble selon la revendication 1, **caractérisé en ce qu'**un composé hydrophobe souple remplit la rainure (2).

4. Le câble selon l'une quelconque des revendications 1 à 3, **caractérisé en ce que** les moyens de rigidification comprennent une pluralité de fils toronnés (9).

5. Le câble selon la revendication 4, **caractérisé en ce que** les fils toronnés sont en acier revêtu d'aluminium.

6. Le câble selon l'une quelconque des revendications 1 à 5, **caractérisé en ce que** les moyens de protection comprennent au moins une bande (8) disposée hélicoïdalement autour du jonc (1) et se chevauchant d'un tour à l'autre.

7. Le câble selon la revendication 6, **caractérisé en ce que** la ou les bandes (8) sont en aluminium ou en alliage d'aluminium.

8. Le câble selon l'une quelconque des revendications 1 à 5, **caractérisé en ce que** les moyens de protection comprennent un tube de protection, disposé autour du jonc (1), de préférence en matière plastique ou métallique.

9. Le câble selon la revendication 8, **caractérisé en ce qu'**il présente une gaine disposée autour des moyens de rigidification (9), la gaine étant de préférence en matière plastique.

10. Le câble selon la revendication 9, **caractérisé en ce qu'**un composé hydrophobe souple est disposé dans les interstices entre le tube de protection et la gaine.

11. Le câble selon la revendication 1, **caractérisé en ce que** les moyens de rigidification comprennent un matériau à base de fibres et **en ce qu'**un tube de protection entoure les moyens de rigidification.

12. Utilisation du câble selon l'une des revendications 1 à 7 comme câble de garde sur un pylône électrique.

13. Utilisation du câble selon l'une quelconque des revendications 8 à 10 dans des conditions sous-marines ou sous-fluviales.

14. Utilisation du câble selon la revendication 11 dans des forages terrestres.
